# EUROPÄISCHE PATENTANMELDUNG

(11) **EP 0 548 526 A1**
(43) Veröffentlichungstag der Anmeldung: **30.06.1993**
(21) Anmeldenummer: 92119401.5
(22) Anmeldetag: 13.11.1992
(51) Int. Cl.: G01C 11/02

(54) **Vorrichtung und Verfahren zur dreidimensionalen Fernerkundung**

(30) Priorität: 15.11.1991 DE 4137645
(71) Anmelder: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Claus, Michael, Dr., W-7080 Aalen (DE); Nolting, Jürgen, Dr., W-7080 Aalen (DE); Duchateau, Rüdiger, Dr., W-7082 Oberkochen (DE); Raasch, Michael, W-7080 Aalen (DE)

(57) **Zusammenfassung**

Bei nur einmaligem Überfliegen eines interessierenden Geländeabschnittes werden Geländestreifen quer zur Flugrichtung über ein bewegliches, mechanisch-optisches Umlenk-Element aus unterschiedlichen Perspektiven jeweils komplett erfaßt. Als mechanisch-optisches Umlenk-Element ist beispielsweise ein Kippspiegel geeignet, der um eine Achse senkrecht zur Flugrichtung gedreht werden kann. Mit Hilfe der erfindungsgemäßen Vorrichtung ist sowohl die diskontinuierliche Erfassung einzelner Geländeabschnitte als auch die kontinuierliche Erfassung des kompletten überflogenen Geländes aus unterschiedlichen Perspektiven mit ein oder mehreren Detektoreinheiten möglich.

## Beschreibung

Die Erfindung betrifft eine Vorrichtung zur dreidimensionalen Fernerkundung nach dem Oberbegriff des Anspruches 1. Gegenstand der Erfindung sind des weiteren Verfahren, die mit Hilfe einer derartigen Vorrichtung durchgeführt werden können.

Zu diesem Zweck ist aus der deutschen Patentschrift DE 35 17 671 bekannt, mit Hilfe eines drehbaren optischen Elementes bei einem Überflug des interessierenden Geländes in zeitlicher Abfolge einen Geländestreifen quer zur Flugrichtung aus mehreren Perspektiven auf ein elektrooptisches Detektorelement abzubilden. Aus den überlappenden Bildern wird mittels photogrammetischer Auswertemethoden auf die dreidimensionale Geländetopologie zurückgeschlossen. Die in der deutschen Patentschrift DE 35 17 671 beschriebene Vorrichtung ist zur Vermeidung von Mehrdeutigkeiten und zum Maßstabsanschluß bei der Auswertung auf die sogenannte 3-Zeilen-Methode ausgelegt, d.h. jeder Geländestreifen wird aus mindestens drei Perspektiven auf das elektrooptische Detektorelement abgebildet. Eine derartige Vorrichtung, die mit einem Detektorelement punktweise zeitlich nacheinander abtastet, wird üblicherweise auch als Line-Scanner bezeichnet. Zum Betrieb einer derartigen Vorrichtung ist es erforderlich, über den interessierenden Geländestreifen quer zur Flugrichtung zu scannen, d.h. es erfolgt eine Abtastung entlang dieses Geländestreifens. Mit Hilfe des beweglichen optischen Elementes wird jeder interessierende Geländestreifen aus jeweils drei Perspektiven auf den elektrooptischen Detektor abgebildet. Aufgrund des nötigen Scannens quer zur Flugrichtung, das eine bestimmte Zeit beansprucht, resultieren Verzeichnungen innerhalb eines Scann-Vorgangs, was auch in der zitierten deutschen Patentschrift beschrieben wird. Eine Korrektur derartiger Verzeichnungen ist nur sehr aufwendig über entsprechende Datenverarbeitungsmethoden möglich. Des weiteren nachteilig bei einer derartigen Vorrichtung ist der komplexe Aufbau des beweglichen optischen Elementes, mit dem neben dem Scannen quer zur Flugrichtung auch die unterschiedlichen Abbildungs-Perspektiven bezüglich des interessierenden Geländestreifens realisiert werden.

Auch der deutschen Patentschrift DE 28 33 808 liegt die Aufgabe zugrunde, dreidimensionale Bilder mit Hilfe einer elektrooptischen Detektoranordnung zu erfassen. Auch dort wird in zeitlicher Abfolge beim Überfliegen eines Geländeabschnittes durch Variation der Ausblickrichtung mittels beweglicher, optischer und mechanischer Teile der interessierende Geländeabschnitt aus unterschiedlichen Perspektiven erfaßt. Im beschriebenen Line-Scanner wird dabei mittels eines beweglichen Umlenkprismas der überflogene Geländestreifen jeweils zeilenweise quer zur Flugrichtung gescannt. Die unterschiedlichen Perspektiven werden dadurch realisiert, daß ein erstes Bild über das Umlenkprisma auf den Detektor abgebildet wird. Das entsprechende zweite Bild wird dagegen über einen Umlenkspiegel und das Umlenkprisma auf den Detektor abgebildet. Der Umlenkspiegel ist um eine Achse senkrecht zur Flugrichtung drehbar und erlaubt somit die Änderung des Basis-Höhenverhältnisses. Insgesamt sind in dieser Vorrichtung demzufolge zwei bewegliche, mechanisch-optische Elemente erforderlich, deren Winkelstellungen aufeinander abzustimmen sind, nämlich das Umlenkprisma sowie der Umlenkspiegel. Daraus resultiert ebenfalls ein komplexer mechanischer Aufbau. Des weiteren ergeben sich aufgrund des Scannens quer zur Flugrichtung die bereits vorher angesprochenen Verzeichnungsprobleme aufgrund des zeitlichen Verzuges beim Scannen eines Geländestreifens.

Es ist daher Aufgabe der vorliegenden Erfindung, eine Vorrichtung zu schaffen, mit der bei einmaligem Überfliegen eines interessierenden Geländeabschnittes dreidimensionale Aufnahmen gewonnen werden können, wobei eventuelle Verzeichnungen der überlappenden Teilbilder korrigierbar sind. Dies soll mit möglichst wenigen beweglichen mechanischen Teilen erreicht werden. Gegenstand der Erfindung sind weiterhin geeignete Verfahren zum Betrieb einer derartigen Vorrichtung, insbesondere die Erzeugung von kontinuierlichen bzw. diskontinuierlichen Stereoaufnahmen.

Diese Aufgabe wird gelöst durch eine Vorrichtung mit den Kennzeichen des Anspruches 1. Geeignete Verfahren zum Betrieb einer derartigen Vorrichtung sind Gegenstand des Anspruchs 9 sowie der folgenden.

Die erfindungsgemäße Vorrichtung umfaßt hierzu neben einer, Detektoreinrichtung und einem Objektiv ein mechanisch-optisches Umlenk-Element, das um eine Achse senkrecht zur Flugrichtung orientiert werden kann. Hierzu geeignet ist beispielsweise ein Kippspiegel. Beim Überfliegen eines interessierenden Geländeabschnittes werden mit Hilfe dieses Kippspiegels in zeitlicher Abfolge verschiedene Perspektiven eines interessierenden Geländestreifens quer zur Flugrichtung auf die Detektoreinrichtung abgebildet. Erfindungswesentlich ist hierbei, daß eine Detektoreinrichtung verwendet wird, die bei einem Belichtungsvorgang den interessierenden Geländestreifen jeweils komplett erfaßt. Somit ist ein Scannen dieses Geländestreifens quer zur Flugrichtung überflüssig. Demzufolge resultieren auch keine Verzeichnungen innerhalb eines erfaßten Geländestreifens bei einem Belichtungsvorgang. Vorzugsweise geeignet hierfür sind beispielsweise elektrooptische Detektoreinrichtungen, wie elektrooptische Zeilensensoren oder aber flächige elektrooptische Sensoren. Weiterhin vorteilhaft bei der erfindungsgemäßen Vorrichtung erweist sich, daß nur ein bewegliches mechanisch-optisches Umlenk-Element erforderlich ist, dessen Positionierung gesteuert werden muß. Des weiteren kommt man bei der erfindungsgemäßen Vorrichtung mit einem relativ einfach aufgebauten und zu fertigenden mechanisch-optischen Umlenk-Element aus.

Zum Betrieb der erfindungsgemäßen Vorrichtung ist des weiteren ein motorischer Antrieb zum Verstellen des mechanisch-optischen Umlenk-Elementes erforderlich, sowie Winkelstellungsgeber, die laufend die aktuelle Winkelposition des Umlenk-Elementes erfassen. Diese Daten werden von einer Steuereinheit verarbeitet, die gleichzeitig die Synchronisation der einzelnen Belichtungsvorgänge übernimmt. Des weiteren müssen die Lagedaten des Flugkörpers bekannt sein, in dem die erfindungsgemäße Vorrichtung untergebracht ist, um die einzelnen erfaßten Geländestreifen aneinander anschließen zu können. Diese Lagedaten können mit Hilfe eines Navigationssystemes oder hochgenauer Zusatzkomponenten wie geeigneter Kreisel, GPS-Empfänger und Höhenmesser erfaßt werden. Mit Hilfe der ermittelten Lagedaten des jeweiligen Flugkörpers ist weiterhin die Korrektur bezüglich Abweichtungen von der Idealflugbahn möglich. So können die ermittelten Nick-, Gier- und Rollwinkel relativ zur Idealflugbahn durch entsprechendes Ausrichten der Detektoreinrichtung und/oder des mechanisch-optischen Umlenk-Elementes korrigiert werden.

Neben dem Erfassen diskontinuierlicher Bilder des überflogenen Geländeabschnittes ist es zudem möglich, den überflogenen Geländeabschnitt mit Hilfe der erfindungsgemäßen Vorrichtung kontinuierlich bildmäßig zu erfassen. Hierzu sind jedoch bestimmte Rahmenbedingungen an die Fluggeschwindigkeit sowie die Winkelgeschwindigkeit einzuhalten, mit der der Kippspiegel bewegt wird. Die zum Betrieb der erfindungsgemäßen Vorrichtung geeigneten Verfahren sind Gegenstand des Anspruchs 9 und der folgenden Ansprüche.

Weitere Vorteile der erfindungsgemäßen Vorrichtung ergeben sich aus der nachfolgenden Beschreibung eines Ausführungsbeispiels anhand der beigefügten Zeichnungen.

Dabei zeigt
- Fig. 1: die Anordnung der einzelnen Komponenten der erfindungsgemäßen Vorrichtung in einem Ausführungsbeispiel;
- Fig. 2: die diskontinuierliche Aufnahme eines überflogenen Geländeabschnittes aus zwei verschiedenen Perspektiven mit Hilfe der erfindungsgemäßen Vorrichtung;
- Fig. 3: die kontinuierliche Aufnahme eines überflogenen Geländeabschnittes aus zwei verschiedenen Perspektiven mit Hilfe der erfindungsgemäßen Vorrichtung.

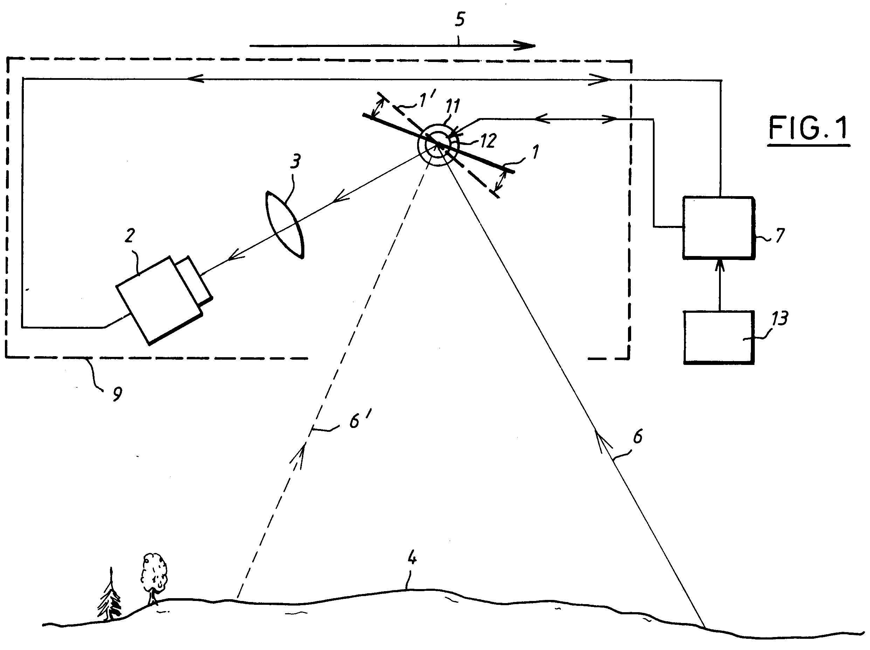

Anhand von Fig. 1 wird die Anordnung der einzelnen Komponenten der erfindungsgemäßen Vorrichtung in einem Ausführungsbeispiel erläutert. Dabei sind in einem nicht dargestellten Flugkörper, der sich in Richtung des Pfeiles (5) über eine interessierende Geländeoberfläche (4) bewegt, in einem entsprechenden Gehäuse (9) die wesentlichen Komponenten der erfindungsgemäßen Vorrichtung angeordnet. Mittels eines Kippspiegels (1/1'), der um eine Achse senkrecht zur Flugrichtung (5) gedreht werden kann, wird über ein geeignetes Objektiv (3) ein Geländestreifen quer zur Flugrichtung (5) auf eine elektrooptische Detektoreinrichtung (2) abgebildet. Alternativ zur Verwendung einer elektrooptischen Detektoreinrichtung ist auch der Einsatz eines herkömmlichen Filmes zur Erfassung der Objektoberfläche möglich. Mit (1) bzw. (1') werden in dieser Darstellung zwei unterschiedliche Stellungen des Kippspiegels (1/1') bezeichnet. Wesentlich bei der erfindungsgemäßen Vorrichtung ist, daß die Ausblickrichtung mit Hilfe nur eines beweglichen mechanisch-optischen Umlenk-Elementes, dem schwenkbaren Kippspiegel (1/1'), einstellbar ist und bei einem Belichtungsvorgang jeweils der gesamte Geländestreifen von der Detektoreinrichtung, in diesem Ausführungsbeispiel von der elektrooptischen Detektoreinrichtung (2) erfaßt wird. Hierzu geeignete elektrooptische Detektoreinrichtungen (2) sind CCD-Zeilensensoren oder aber CCD-Flächenarrays. Damit entfallen Probleme hinsichtlich Verzeichnungen, die beim Abscannen eines Geländestreifens quer zur Flugrichtung mit Hilfe eines Line-Scanners auftreten würden. Über den schwenkbaren Kippspiegel (1,1') kann die Ausblickrichtung variiert werden, was anhand der beiden eingezeichneten Spiegelstellungen (1) und (1') sowie der dazugehörigen Abbildungsstrahlengänge (6) und (6') verdeutlicht wird. Zur Steuerung der erfindungsgemäßen Vorrichtung ist es erforderlich, die jeweilige Ausblickrichtung, d.h. die aktuelle Winkelposition des Kippspiegels (1/1') laufend mit Hilfe von Winkelstellungsgebern (11) zu erfassen. Die Verstellung des Kippspiegels (1/1') erfolgt über einen Antrieb (12). Die entsprechenden Winkelstellungsgeber (11) sind vorzugsweise mit diesem Antrieb (12) gekoppelt bzw. in diesen integriert angeordnet. Die Signale des Winkelstellungsgebers (11) werden laufend in eine zentrale Steuereinheit (7) eingelesen und dort gespeichert. In Abhängigkeit von der jeweiligen Ausblickrichtung, d.h. der jeweiligen Winkelstellung des Kippspiegels (1/1') steuert die Steuereinheit (7) das Einlesen der Bildsignale über die elektrooptische Detektoreinrichtung (2). Die Weiterverarbeitung der gespeicherten Bildsignale kann unmittelbar mit einem weiteren daran angeschlossenen Rechner erfolgen, oder aber erst später, wenn geeignete Auswertemöglichkeiten zur Verfügung stehen. Zur weiteren Verarbeitung der Bildsignale sind die exakten Lagedaten des Flugkörpers erforderlich, die beispielsweise von einer Navigationseinheit (13) an die Steuereinheit (7) übermittelt werden.

Alternativ zum beschriebenen Kippspiegel ist es weiterhin möglich, einen rotierenden Polygonspiegel für denselben Zweck einzusetzen. Des weiteren könnte die Ausblickrichtung durch Schwenken der Anordnung aus Detektoreinrichtung und Objektiv variiert werden.

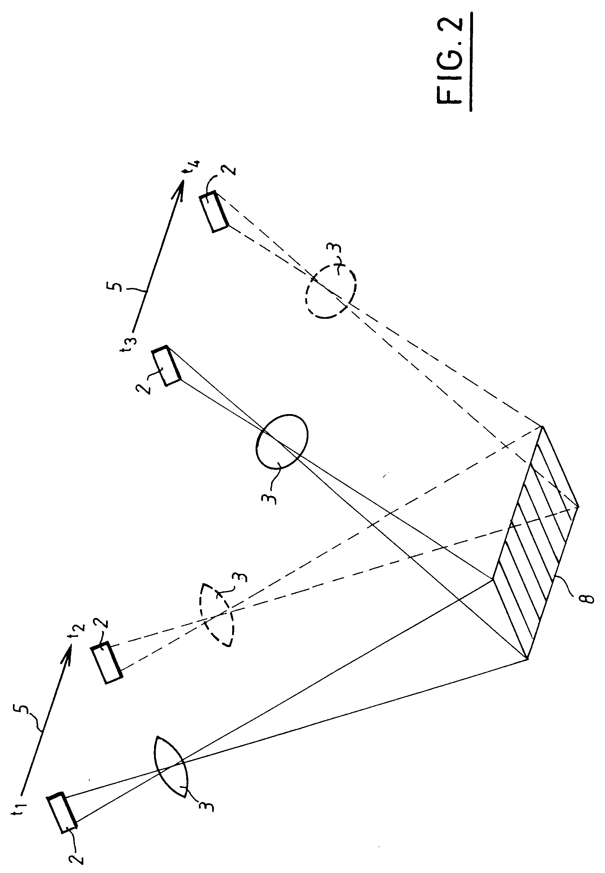

In Fig. 2 wird beispielhaft ein Verfahren zur Aufnahme eines interessierenden Geländeabschnittes (8) mit Hilfe der erfindungsgemäßen Vorrichtung beschrieben. Dabei sollen diskontinuierliche Aufnahmen des jeweiligen Geländeabschnittes (8) aus mindestens zwei unterschiedlichen Perspektiven realisiert werden. Lediglich schematisch dargestellt sind hierbei die elektrooptische Detektoreinrichtung (2) sowie das verwendete Objektiv (3). Nicht dargestellt sind die bereits in Fig. 1 erläuterten Komponenten der erfindungsgemäßen Vorrichtung wie Kippspiegel und Steuereinrichtung. Der Flugkörper bewegt sich in Richtung des Pfeiles (5) über den zu erfassenden Geländeabschnitt (8). In einem ersten Aufnahmezyklus, beginnend zum Zeitpunkt t₁ wird der interessierende Geländeabschnitt (8) über den nicht dargestellten Kippspiegel aus einer vorwärtsgerichteten Perspektive erfaßt. Hierbei wird mit jedem Belichtungsvorgang ein Teilstreifen des interessierenden Geländeabschnittes (8) erfaßt. Der Ausblickwinkel wird bis zum Zeitpunkt t₂ konstant gehalten. Anschließend wird der Ausblickwinkel verändert, was z.B. durch die Drehung des Kippspiegels erfolgen kann, wie in Fig. 1 beschrieben wurde. Zum Zeitpunkt t₃ ist dies erfolgt und ab diesem Zeitpunkt beginnt ein zweiter Aufnahmezyklus, bei dem der interessierende Geländeabschnitt (8) bis zum Zeitpunkt t₄ mit konstantem rückwärtsgerichteten Ausblickwinkel aufgenommen wird. Damit ist es bei nur einmaligem Überfliegen des interessierenden Geländeabschnittes (8) möglich, stereoskopische Bilder desselben aufzunehmen. Es ist dabei unerheblich, ob der jeweilige Geländeabschnitt (8) in Vorwärts- bzw. Rückwärtsperspektive aus demselben Blickwinkel gegen Nadir erfaßt wird. Prinzipiell sind mit Hilfe der erfindungsgemäßen Vorrichtung verschiedene Ausblickwinkel zwischen Vorwärts- und Rückwärtsperspektive möglich, es resultiert dann jedoch eine konstante Geometrieverzerrung mit unterschiedlicher Bodenauflösung zwischen den beiden Perspektiven, die korrigiert werden muß.

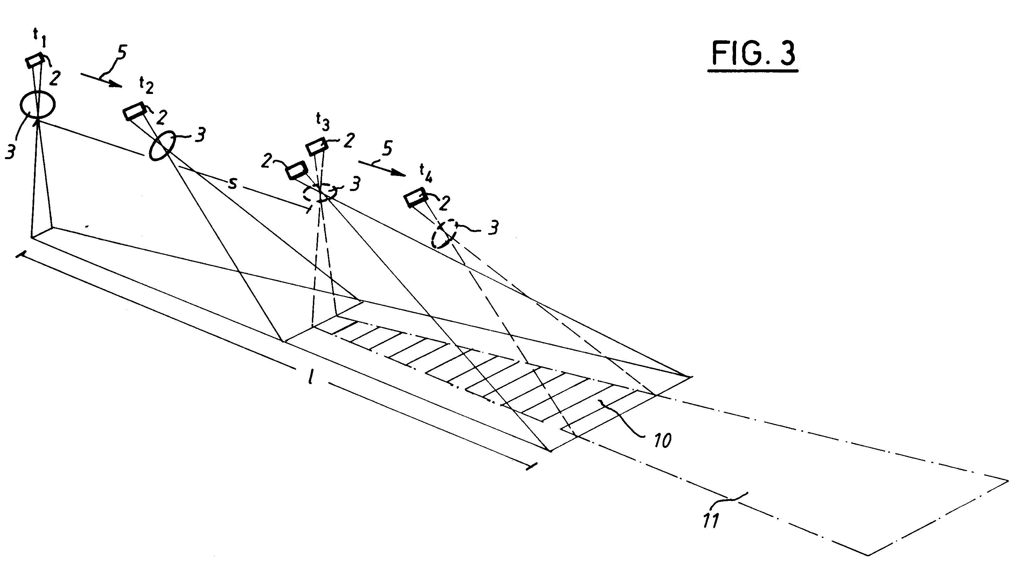

Anhand von Fig. 3 wird beispielhaft ein Verfahren zur kontinuierlichen Erfassung des überflogenen Geländes mit Hilfe der erfindungsgemäßen Vorrichtung erläutert. Dabei ist, wie bereits in Fig. 2, lediglich die elektrooptische Detektoreinrichtung (2) sowie das verwendete Objektiv (3) schematisch dargestellt, während die weiteren Komponenten der erfindungsgemäßen Vorrichtung nicht dargestellt werden. Zum Zeitpunkt t₁ beginnt ein erster Aufnahmezyklus, wobei die Ausblickrichtung nadirwärts gerichtet ist. Während der Flugbewegung in Richtung des Pfeiles (5) wird die Ausblickrichtung, z.B. durch Drehen des Kippspiegels, mindestens so schnell in Flugrichtung verändert, daß zum Zeitpunkt t₃ am Boden die Strecke 1 abgetastet wurde. Die Strecke 1 muß dabei mindestens doppelt so lang sein wie die in der Zeit zwischen t₃ und t₁ zurückgelegte Flugstrecke s. Zum Zeitpunkt t₃ erfolgt eine schnelle Änderung der Ausblickrichtung, z.B. durch Drehen des Kippspiegels auf den Anfangswert des Ausblickwinkels, d.h. in diesem Beispiel in Nadirrichtung, wonach anschließend der zweite Aufnahmezyklus beginnt. Dabei wird das Gelände ebenfalls wieder mit vorwärtsdrehender Blickrichtung wie vorab beschrieben erfaßt. In dem zwischen den Zeitpunkten t₃ und t₄ aufgenommenen Geländestreifen (10), der in beiden Aufnahmezyklen erfaßt wurde, ist somit eine stereoskopische Auswertung möglich. Der daran anschließende Geländestreifen (11) wird beim nächsten Aufnahmezyklus aus der anderen Perspektive aufgenommen, so daß die kontinuierliche stereoskopische Erfassung des überflogenen Geländes gewährleistet ist. Die Aufnahmegeometrie ist dabei trapezförmig verzerrt. Eine Korrektur dieser Verzerrung ist aufgrund der nur linearen Verzerrung bei ebenen Gelände leicht möglich.

## Patentansprüche

1. Vorrichtung zur dreidimensionalen Fernerkundung von einem Flugkörper aus, mittels eines opto-mechanischen Abtasters, der mindestens ein Objektiv sowie eine in dessen Bildebene angeordnete Detektoreinrichtung umfaßt, wobei die Ausblickrichtung mittels beweglicher, mechanisch-optischer Umlenk-Elemente um eine Achse senkrecht zur Flugrichtung variabel ist und Winkelstellungsgeber laufend die aktuelle Ausblickrichtung erfassen, dadurch gekennzeichnet, daß eine Detektoreinrichtung (2) vorgesehen ist, die bei jedem einzelnen Belichtungsvorgang einen kompletten Geländestreifen quer zur Flugrichtung (5) erfaßt und nur ein bewegliches, mechanisch-optisches Umlenk-Element (1/1') zur Realisierung verschiedener Ausblickrichtungen vorgesehen ist.

2. Vorrichtung nach Anspruch 1, dadurch gekennzeichnet, daß als Detektoreinrichtung eine elektrooptische Detektoreinrichtung (2), bestehend aus mehreren Einzelelementen, vorgesehen ist.

3. Vorrichtung nach Anspruch 2, dadurch gekennzeichnet, daß eine Steuereinrichtung (7) vorgesehen ist, die die Meßwerte der Winkelstellungsgeber (11) sowie die Lagedaten des Flugkörpers erfaßt, speichert und in Abhängigkeit dieser erfaßten Meßwerte die Ausblickrichtung variiert, sowie das Einlesen der Signale in die elektrooptische Detektoreinrichtung (2) und deren Weiterverarbeitung steuert.

4. Vorrichtung nach Anspruch 2, dadurch gekennzeichnet, daß das zur Realisierung verschiedener Ausblickrichtungen vorgesehene mechanisch-optische Umlenk-Element (1/1') um eine Achse senkrecht zur Flugrichtung drehbar gelagert und motorisch verstellbar ist.

5. Vorrichtung nach Anspruch 4, dadurch gekennzeichnet, daß als mechanisch-optisches Umlenk-Element (1/1') ein Kippspiegel vorgesehen ist.

6. Vorrichtung nach mindestens einem der Ansprüche 2 bis 5, dadurch gekennzeichnet, daß als elektrooptische Detektoreinrichtung (2) ein CCD-Zeilensensor vorgesehen ist.

7. Vorrichtung nach mindestens einem der Ansprüche 2 bis 5, dadurch gekennzeichnet, daß als elektrooptische Detektoreinrichtung (2) ein CCD-Flächenarray vorgesehen ist.

8. Vorrichtung nach Anspruch 1, dadurch gekennzeichnet, daß als Detektoreinrichtung ein Film vorgesehen ist.

9. Verfahren zur dreidimensionalen Fernerkundung von einem Flugkörper aus, mittels eines opto-mechanischen Abtasters, der mindestens ein Objektiv sowie eine in dessen Bildebene angeordnete Detektoreinrichtung aufweist, wobei die Ausblickrichtung mittels beweglicher, mechanisch-optischer Umlenk-Elemente um eine Achse senkrecht zur Flugrichtung variabel ist und Winkelstellungsgeber laufend die aktuelle Ausblickrichtung erfassen, dadurch gekennzeichnet, daß in zeitlicher Abfolge durch Variation der Ausblickrichtung um eine Achse senkrecht zur Flugrichtung mittels eines beweglichen, mechanisch-optischen Umlenk-Elementes ein bestimmter überflogener Geländeabschnitt (8,10) aus mindestens zwei verschiedenen Perspektiven von der Detektoreinrichtung (2) erfaßt wird.

10. Verfahren nach Anspruch 9, dadurch gekennzeichnet, daß die überflogenen Geländeabschnitte mit einer elektrooptischen Detektoreinrichtung (2) erfaßt werden.

11. Verfahren nach Anspruch 9, dadurch gekennzeichnet, daß durch motorisches Schwenken eines Kippspiegels (1/1') die Ausblickrichtung variiert wird.

12. Verfahren nach mindestens einem der Ansprüche 9-11 zum diskontinuierlichen Erfassen dreidimensionaler Bilder, dadurch gekennzeichnet, daß in einem ersten Aufnahmezyklus mit festgehaltener Ausblickrichtung aus einer vorwärts gerichteten Perspektive ein bestimmter überflogener Geländeabschnitt (8) erfaßt wird, anschließend die Ausblickrichtung um eine Achse senkrecht zur Flugrichtung (5) geschwenkt wird und in einem zweiten Aufnahmezyklus der gleiche Geländeabschnitt (8) mit festgehaltener Ausblickrichtung aus einer Rückwärtsperspektive nochmals erfaßt wird.

13. Verfahren nach mindestens einem der Ansprüche 9-11 zum kontinuierlichen Erfassen dreidimensionaler Bilder, dadurch gekennzeichnet, daß in einem ersten Aufnahmezyklus von einem Anfangswert der Ausblickrichtung ausgehend, die Ausblickrichtung stetig variiert wird, anschließend die Ausblickrichtung wieder auf den Ausgangswert zurückgesetzt wird und in einem zweiten Aufnahmezyklus ebenfalls wieder die Ausblickrichtung wie im ersten Aufnahmezyklus variiert wird.

14. Verfahren nach Anspruch 13, dadurch gekennzeichnet, daß die Variation der Ausblickrichtung mit einer Geschwindigkeit erfolgt, daß die von zwei Aufnahmezyklen in Flugrichtung (5) stereoskopisch erfaßte Länge des abgetasteten Geländeabschnittes mindestens so groß ist wie die im ersten Aufnahmezyklus zurückgelegte Flugstrecke.
